# EUROPÄISCHE PATENTSCHRIFT

(11) **EP 1 777 260 B1**
(45) Veröffentlichungstag und Bekanntmachung des Hinweises auf die Patenterteilung: **22.04.2009**
(21) Anmeldenummer: 06120611.6
(22) Anmeldetag: 14.09.2006
(51) Int. Cl.: C08K 13/02

(54) **Kautschukmischung und Reifen**
Rubber composition and tire comprising thereof
Composition de caoutchouc pour pneumatiques

(30) Priorität: 22.10.2005 DE 102005050764
(43) Veröffentlichungstag der Anmeldung: 25.04.2007
(73) Patentinhaber: Continental Aktiengesellschaft, 30165 Hannover (DE)
(72) Erfinder: Dettmer, Dr. Fabian, 38106, Braunschweig (DE); Soehnen, Dr. Dietmar, 31867, Lauenau (DE); Struebel, Dr. Christian, 30559, Hannover (DE); Wagemann, Dr. Jürgen, 31162, Bad Salzdetfurth (DE); Artal-Lahoz, Dr. Carmen, 40007, Sevilla (ES); Weinreich, Dr. Hajo, 31840, Hessisch Oldendorf (DE)

(56) Entgegenhaltungen:
- DE-A1- 19 834 802

## Beschreibung

Die Erfindung betrifft eine schwefelvernetzbare Kautschukmischung, insbesondere für Laufstreifen von Reifen, enthaltend zumindest einen Dienkautschuk, Ruß und/oder Kieselsäure, Zinkoxid und ein Prozesshilfsmittel. Die Erfindung betrifft ferner einen Reifen, dessen Laufstreifen zumindest zum Teil aus der mit Schwefel vulkanisierten Kautschukmischung besteht.

Bei der Verarbeitung schwefelvernetzbarer Kautschukmischungen ist es üblich und zur Vermeidung nachteiliger Effekte auf die Vulkanisateigenschaften auch notwendig, für die Schwefelvernetzung von Dienkautschukmischungen als essentiellen Aktivator Zinkoxid oder Zinkseifen einzusetzen. In Gegenwart von Zink bilden sich Komplexe mit dem Beschleuniger, die den Schwefel für die Vernetzung des Kautschuks aktivieren.

Schwefelvernetzbaren Kautschukmischungen werden ferner unterschiedliche Prozesshilfsmittel (Verarbeitungshilfsmittel, Kompatibilisatoren) zugesetzt, die die Herstellung und Verarbeitung von Kautschukmischungen erleichtern bzw. die Produktion einwandfreier Gummiartikel ermöglichen. Zu diesen Prozesshilfsmitteln zählen beispielsweise die als Dispergatoren und Gleitmittel wirkenden Fettsäuren, Fettsäureester und Metallseifen, wobei von den Metallseifen den Zinkseifen, die auch als Abbaumittel wirken, derzeit die größte Bedeutung zukommt.

Zinkverbindungen in Kautschukmischungen sind jedoch in die Diskussion geraten, da es sich bei Zink um ein Schwermetall handelt, welches zudem ein Potenzial zur Schädigung der aquatischen Umwelt besitzt. Es wird befürchtet, dass insbesondere durch Abrieb von Reifen größere Mengen an Zink in die Umwelt gelangen könnten. Zum anderen stellen hohe Mengen an Zink in der Mischung ein Problem bei der Reifenfertigung dar, weil sich bei der Vulkanisation der Reifen Zinksulfid bildet, welches sich an den Entlüftungsventilen der Reifenformen ablagert und zu blockierten Entlüftungsventilen führen kann. Die blockierten Entlüftungsventile führen dann zu so genannten Schwindstellen im Reifen durch eingeschlossene Luftblasen.

Aufgrund der vorgenannten Probleme ist man bestrebt, den Anteil an Zinkverbindungen in Kautschukmischungen für Reifen zu reduzieren. So werden seit einiger Zeit Prozesshilfsmittel vertrieben, die zinkfrei sind, wie z. B. zinkfreie Abbaumittel oder zinkfreie Gleitmittel. Ein vollständiger Verzicht auf Zink in schwefelvernetzbaren Dienkautschukmischungen ist derzeit in der Regel nicht möglich, da es dann zu niedrigen Vernetzungsstärken und deutlich geringeren Steifigkeiten bei den Vulkanisaten und damit zu nicht gewünschten Vulkanisateigenschaften kommt. Typischerweise werden heute in schwefelvernetzbaren Kautschukmischungen für Reifenlaufstreifen 2,5 bis 5 phr Zinkoxid eingesetzt.

Der Erfindung liegt nun die Aufgabe zugrunde, den Zinkgehalt in schwefelvernetzbaren Dienkautschukmischungen weiter zu reduzieren, ohne dass Einbußen in den Vulkanisateigenschaften hingenommen werden müssen.

Gelöst wird die Aufgabe erfindungsgemäß dadurch, dass die Kautschukmischung
- zumindest einen Dienkautschuk,
- Ruß und/oder Kieselsäure,
- 0,3 - 2 phr Zinkoxid und
- 0,5 - 6 phr zumindest eines Prozesshilfsmittels, welches aus Natrium- und/oder Kaliumseifen sowie Mono- und/oder Di-Glycerinestern von gesättigten und/oder ungesättigten C₁₀- bis C₂₈-Carbonsäuren zusammengesetzt ist, wobei das Gewichtsverhältnis von Natrium- und/oder Kaliumseifen zu Mono- und/oder Di-Glycerinestern im Prozesshilfsmittel 0,1 bis 10, vorzugsweise 2 bis 4, beträgt,
enthält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Überraschenderweise lässt sich bei schwefelvernetzbaren und gefüllten Dienkautschukmischungen der Anteil an Zinkoxid auf deutlich weniger als 2,5 phr ohne negativen Einfluss auf die Vulkanisateigenschaften reduzieren, wenn das spezielle Prozesshilfsmittel zugesetzt wird. Das Prozesshilfsmittel scheint die Menge an für die Schwefelvulkanisation notwendigem Zinkoxid stark zu reduzieren.

Die erfindungsgemäße Kautschukmischung bietet den Vorteil, dass die Menge an Zink in der Mischung auf ein Minimum reduziert werden kann, wobei die Steifigkeiten und Vernetzungsstärken der Vulkanisate auf hohem Niveau verbleiben. Die Umweltverträglichkeit der aus diesen Mischungen hergestellten Produkte wird dadurch verbessert.

Durch die Verringerung von Zinkoxid in der Mischung ergibt sich außerdem, dass die Ablagerung von Zinksulfid an den Entlüftungventilen der Reifenformen vermindert werden kann und dadurch die Gefahr der Blockierung der Entlüftungsventile reduziert wird.

Die erfindungsgemäße Kautschukmischung enthält nur 0,3 bis 2 phr, bevorzugt 0,5 bis 1,5 phr, Zinkoxid. Schon diese geringen Mengen reichen aus, um die Schwefelvulkanisation zu aktivieren und eine ausreichende Vernetzungsstärke bei hoher Steifigkeit der Vulkanisate zu erzielen. Die Vulkanisateigenschaften, die die strukturelle Haltbarkeit charakterisieren, verbleiben auf hohem Niveau.

Die Menge an Zinkoxid in der Mischung lässt sich noch weiter reduzieren, wenn als Zinkoxid ein hochaktives Zinkoxid mit einer BET-Oberfläche von 8 bis 50 m²/g, vorzugsweise 35 bis 45 m²/g, verwendet wird.

Das spezielle Prozesshilfmittel aus Natrium- und/oder Kaliumseifen sowie Mono- und/oder Di-Glycerinestern von gesättigten und/oder ungesättigten C₁₀- bis C₂₈-Carbonsäuren wird in Mengen von 0,5 bis 6 phr, bevorzugt 1 bis 4 phr, eingesetzt.

Gemäß einer bevorzugten Weiterbildung der Erfindung ist das Prozesshilfsmittel aus Natrium- und/oder Kaliumseifen sowie Mono- und/oder Di-Glycerinestern von gesättigten und/oder ungesättigten C₁₄- bis C₁₈-Carbonsäuren, vorzugsweise von Palmitin- und Stearinsäure, zusammengesetzt. Mit diesen Prozesshilfsmitteln wurden die besten Ergebnisse hinsichtlich einer Reduzierung des Zinkgehaltes in der Mischung erzielt.

Der Gehalt an Natrium und/oder Kalium im Prozesshilfsmittel beträgt 0,2 bis 20 Gew.-%, vorzugsweise 2 bis 10 Gew.-%, und der Anteil an Kalium bezogen auf den Gesamtalkalimetallgehalt im Prozesshilfsmittel beträgt bevorzugt 60 bis 90 mol-%. So kann beispielsweise als Prozesshilfsmittel Struktol® HT 207 der Firma Schill + Seilacher eingesetzt werden.

Die schwefelvernetzbare Kautschukmischung enthält zumindest einen Dienkautschuk. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk (NR), synthetischem Polyisopren (IR), Polybutadien (BR) und Styrol-Butadien-Copolymer (SBR). Diese Dienelastomere lassen sich gut zu der erfindungsgemäßen Kautschukmischung verarbeiten und ergeben in den vulkanisierten Reifen gute Reifeneigenschaften.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Enthält die Kautschukmischung als Dienkautschuk Polybutadien (BR), kann es sich dabei sowohl um cis-1,4- als auch um Vinyl-Polybutadien (10-90 Gew.-% Vinyl-Anteil) handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Bei dem Styrol-Butadien-Copolymer kann es sich um lösungspolymerisiertes Styrol-Butadien-Copolymer (S-SBR) mit einem Styrolgehalt, bezogen auf das Polymer, von ca. 10 bis 45 Gew.-% und einem Vinylgehalt (Gehalt an 1,2-gebundenem Butadien, bezogen auf das gesamte Polymer) von 10 bis 70 Gew.-% handeln, welches zum Beispiel unter Verwendung von Lithiumalkylen in organischem Lösungsmittel hergestellt werden kann. Die S-SBR können auch gekoppelt und endgruppenmodifiziert sein. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk oder Ethylen-Propylen-Dien-Kautschuk (EPDM), enthalten.

Die Kautschukmischung enthält als Füllstoff zumindest Ruß und/oder Kieselsäure.
Die verwendeten Ruße weisen bevorzugt folgende Charakteristika auf: DBP-Zahl (gemäß ASTM D 2414) 90 bis 200 mL/100 g, CTAB-Zahl (gemäß ASTM D 3765) 80 bis 170 m²/g und Iodadsorptionszahl (gemäß ASTM D 1510) 10 bis 250 g/kg. Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN 66131 und 66132) von 35 bis 350 m²/g, vorzugsweise von 145 bis 270 m²/g und eine CTAB-Oberfläche (gemäß ASTM D 3765) von 30 bis 350 m²/g, vorzugsweise von 120 bis 285 m²/g, aufweist. Derartige Kieselsäuren führen z. B. in Kautschukmischungen für Reifenlaufstreifen zu besonders guten physikalischen Eigenschaften der Vulkanisate. Außerdem können sich Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs VN3 (Handelsname) der Firma Degussa als auch hoch dispergierte Kieselsäuren, so genannte HD-Kieselsäuren (z. B. Ultrasil 7000 der Firma Degussa), zum Einsatz kommen.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: - SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. Auch geblockte Mercaptosilane, wie sie z. B. aus der WO 99/09036 bekannt sind, können als Silan-Kupplungsagens eingesetzt werden.

Die Silan-Kupplungsagenzien werden in Mengen von 0,2 bis 30 Gewichtsteilen, vorzugsweise 1 bis 15 Gewichtsteilen, bezogen auf 100 Gewichtsteile Füllstoff, insbesondere Kieselsäure, eingesetzt, da dann eine optimale Anbindung des Füllstoffes an den oder die Kautschuke erfolgen kann.

Die Kautschukmischung kann außerdem noch andere Füllstoffe, wie beispielsweise Alumosilicate, Kreide, Stärke, Magnesiumoxid, Titandioxid oder Kautschukgele enthalten.

Eine bevorzugt eingesetzte Mischung für ein besonders gute Reifeneigenschaften enthält neben dem Zinkoxid und dem Prozesshilfsmittel
- 10 - 80 phr Naturkautschuk,
- 0 - 50 phr Polybutadien,
- 10 - 80 phr Styrol-Butadien-Copolymer,
- 10 - 100 phr Kieselsäure,
- 5 - 80 phr Ruß.

Die Kautschukmischung kann außer den genannten Substanzen noch andere Zusatzstoffe, wie z. B. Weichmacher (z. B. aromatische, naphthenische oder paraffinische Mineralölweichmacher, MES (mild extraction solvate) oder TDAE (treated distillate aromatic extract) oder flüssige Polymere, wie z. B. flüssiges Polybutadien) aufweisen.

Des Weiteren kann die erfindungsgemäße Kautschukmischung übliche Zusatzstoffe in üblichen Gewichtsteilen enthalten. Zu diesen Zusatzstoffen zählen Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Fettsäuren (z. B. Stearinsäure), Wachse, Harze und Mastikationshilfsmittel, wie z. B. 2,2'-Dibenzamidodiphenyldisulfid (DBD).

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide. Die Beschleuniger können auch in Kombination miteinander eingesetzt werden, wobei sich synergistische Effekte ergeben können.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Das spezielle Prozesshilfsmittel wird der Fertigmischung zugegeben. Anschließend wird die Mischung weiterverarbeitet, z. B. durch einen Extrusionsvorgang, und in die entsprechende Form gebracht. Bevorzugt wird die Mischung in die Form eines Laufstreifens gebracht. Ein so erzeugter Laufstreifenmischungsrohling wird bei der Herstellung des Reifenrohlings, insbesondere Fahrzeugluftreifenrohlings, wie bekannt, aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden. Die auf diese Weise mit der erfindungsgemäßen Mischung hergestellten Reifen zeigen trotz eines geringen Zinkgehaltes im Laufstreifen gute Eigenschaften.

Die Erfindung soll nun anhand von Vergleichs- und Ausführungsbeispielen, die in den Tabellen 1 und 2 zusammengefasst sind, näher erläutert werden.

Die Vergleichsmischungen sind mit V, die erfindungsgemäßen Mischungen mit E gekennzeichnet. In den Mischungen 1 bis 5 der Tabelle 1 und 6 bis 10 der Tabelle 2 wurden die Mengen an Zinkoxid und an dem speziellen Prozesshilfsmittel variiert. Bei den Mischungen der Tabelle 1 handelt es sich um eine Winterreifenmischung mit geringem Kieselsäuregehalt, bei den Mischungen der Tabelle 2 handelt es sich um Sommerreifenmischungen mit hohem Kieselsäuregehalt. Die Mengen an Weichmacher wurde jeweils so eingestellt, dass die Vulkanisate eine nahezu gleiche Shore A-Härte aufwiesen.

Die Mischungsherstellung erfolgte unter üblichen Bedingungen in zwei Stufen in einem Labortangentialmischer, wobei das spezielle Prozesshilfsmittel bei der Herstellung der Fertigmischung zugegeben wurde. Es wurden die Umsatzzeiten bis zum Erreichen der relativen Vernetzungsgrade von 10, 40 und 90 % (t₁₀, t₄₀, t₉₀) über ein rotorloses Vulkameter (MDR = Moving Disc Rheometer) gemäß DIN 53 529 und die Mooney-Viskositäten der Mischungen gemäß DIN 53 523 mit einem Scherscheiben-Viskosimeter bei 100 °C ermittelt. Als Maß für die Netzwerkstärke dient die Differenz aus dem maximalen Drehmoment MHF und dem minimalen Drehmoment ML ermittelt im Scherscheibenviskosimeter. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur und 70 °C gemäß DIN 53 505
- Rückprallelastizität bei Raumtemperatur und 70 °C gemäß DIN 53 512
- Zugfestigkeit bei Raumtemperatur gemäß DIN 53 504
- Reißdehnung bei Raumtemperatur gemäß DIN 53 504
- Spannungswerte bei 100, 200 und 300 % Dehnung bei Raumtemperatur gemäß DIN 53 504
- Bruchenergiedichte bestimmt im Zugversuch nach DIN 53 504, wobei die Bruchenergiedichte die bis zum Bruch erforderliche Arbeit, bezogen auf das Volumen der Probe, ist
- Verlustfaktor tan δ bei 0 und 60 °C aus dynamisch-mechanischer Messung gemäß DIN 53 513
- dynamischer Speichermodul E' bei 0 und 60 °C aus dynamisch-mechanischer Messung gemäß DIN 53 513

**Tabelle 1**

| Bestandteile | Einheit | 1(V) | 2(V) | 3(E) | 4(E) | 5(E) |
|---|---|---|---|---|---|---|
| Naturkautschuk | phr | 35 | 35 | 35 | 35 | 35 |
| BR^{a} | phr | 25 | 25 | 25 | 25 | 25 |
| S-SBR^{b} | phr | 40 | 40 | 40 | 40 | 40 |
| Ruß N339 | phr | 76 | 76 | 76 | 76 | 76 |
| Kieselsäure^{c} | phr | 25 | 25 | 25 | 25 | 25 |
| Weichmacheröl | phr | 48 | 46 | 44 | 46 | 44 |
| Alterungsschutzmittel | phr | 6 | 6 | 6 | 6 | 6 |
| Stearinsäure | phr | 1,5 | 1 | 1 | 1 | 1 |
| Silan-Kupplungsagens^{d} | phr | 2,1 | 2,1 | 2,1 | 2,1 | 2,1 |
| Zinkoxid 1^{e} | phr | 3 | 1,3 | 1,3 | 1,3 | - |
| Zinkoxid 2^{f} | phr | - | - | - | - | 0,9 |
| Prozesshilfsmittel^{g} | phr | - | - | 3 | 1,5 | 3 |
| Beschleuniger | phr | 2 | 2 | 1,8 | 1,9 | 1,8 |
| Schwefel | phr | 1,7 | 1,7 | 1,7 | 1,7 | 1,7 |

| Eigenschaften | | | | | | |
|---|---|---|---|---|---|---|
| Mooney ML 1+3 100 °C | - | 67,8 | 75,2 | 67,5 | 67,1 | 67 |
| t₁₀ | min | 2,9 | 2,0 | 2,77 | 2,85 | 2,53 |
| t₄₀ | min | 4,01 | 3,0 | 3,67 | 3,79 | 3,31 |
| t₉₀ | min | 7,16 | 5,96 | 6,23 | 6,33 | 5,42 |
| ML | dNm | 3,42 | 3,76 | 3,27 | 3,35 | 3,29 |
| MHF | dNm | 13,42 | 15,29 | 13,48 | 13,39 | 13,13 |
| MHF - ML | dNm | 10 | 11,53 | 10,21 | 10,04 | 9,84 |
| Shore-A-Härte RT | Shore A | 60,3 | 61,7 | 62,2 | 61,1 | 61,5 |
| Shore-A-Härte 70 °C | Shore A | 54 | 56,7 | 55,3 | 54,6 | 54,7 |
| Rückprallelast. RT | % | 23,8 | 25,6 | 23,6 | 22,8 | 22,8 |
| Rückprallelast. 70 °C | % | 32,8 | 32,3 | 32,8 | 31,3 | 30,2 |
| Zugfestigkeit bei RT | MPa | 12,2 | 12,2 | 12 | 12,3 | 11,8 |
| Reißdehnung bei RT | % | 529 | 465 | 491 | 523 | 506 |
| Spannungswert 100 % | MPa | 1,61 | 1,7 | 1,76 | 1,68 | 1,72 |
| Spannungswert 200 % | MPa | 3,56 | 3,76 | 3,93 | 3,72 | 3,76 |
| Spannungswert 300 % | MPa | 6,52 | 6,8 | 7,13 | 6,77 | 6,82 |
| Bruchenergiedichte | J/cm³ | 26,1 | 23,4 | 24,2 | 26,3 | 24,6 |
| tan δ 0 °C | - | 0,282 | 0,275 | 0,284 | 0,284 | 0,286 |
| tan δ 60 °C | - | 0,197 | 0,198 | 0,202 | 0,202 | 0,221 |
| E' 0 °C | MPa | 36,7 | 43,0 | 44,4 | 42,0 | 46,0 |
| E' 60 °C | MPa | 17,3 | 17,5 | 18,2 | 18,2 | 18,2 |

| | | | | | | |
|---|---|---|---|---|---|---|
| ^{a} High-cis Polybutadien ^{b} lösungspolymerisiertes Styrol-Butadien-Copolymer, VSL-5025, Bayer AG, Deutschland ^{c} VN3, Degussa, Deutschland ^{d} flüssiges Gemisch aus 3,3'-Bis(triethoxysilylpropyl)polysulfiden, S₁: 5,8 %, S₂: 70 %, S₃: 17,9 %, S₄: 2,4 %, Sulfidgehalt insgesamt: 96 % ^{e} indirektes Zinkoxid mit einer BET-Oberfläche von 4 - 8 m²/g, Typ RedSeal ^{f} hochaktives Zinkoxid mit einer BET-Oberfläche von 40 m²/g, Silox Active Free Flowing, Silox S. A. Belgien ^{g} Mischung aus Na/K-Seifen und Glycerinestern der Palmitin/Stearinsäure, Struktol® HT 207, Schill + Seilacher AG, Deutschland | | | | | | |

**Tabelle 2**

| Bestandteile | Einheit | 6(V) | 7(V) | 8(E) | 9(E) | 10(E) |
|---|---|---|---|---|---|---|
| Naturkautschuk | phr | 30 | 30 | 30 | 30 | 30 |
| S-SBR^{b} | phr | 70 | 70 | 70 | 70 | 70 |
| Ruß N339 | phr | 5 | 5 | 5 | 5 | 5 |
| Kieselsäure^{c} | phr | 86 | 86 | 86 | 86 | 86 |
| Weichmacheröl | phr | 25 | 23 | 21 | 23 | 21 |
| Alterungsschutzmittel | phr | 7 | 7 | 7 | 7 | 7 |
| Stearinsäure | phr | 1 | 1 | 1 | 1 | 1 |
| Verarbeitungshilfsmittel | phr | 4 | 4 | 4 | 4 | 4 |
| Silan-Kupplungsagens^{d} | phr | 8 | 8 | 8 | 8 | 8 |
| Zinkoxid 1^{e} | phr | 2 | 1,3 | 1,3 | 1,3 | - |
| Zinkoxid 2^{f} | phr | - | - | - | - | 0,9 |
| Prozesshilfsmittel^{g} | phr | - | - | 3 | 1,5 | 3 |
| Beschleuniger | phr | 4 | 4 | 3,5 | 3,75 | 3,5 |
| Schwefel | phr | 1,7 | 1,7 | 1,7 | 1,7 | 1,7 |

| Eigenschaften | | | | | | |
|---|---|---|---|---|---|---|
| Mooney ML 1+3 100 °C | - | 46,1 | 51,2 | 50,7 | 48 | 50,3 |
| t₁₀ | min | 2,31 | 1,7 | 2,95 | 2,83 | 2,47 |
| t₄₀ | min | 3,24 | 2,61 | 3,94 | 3,84 | 3,35 |
| t₉₀ | min | 7,38 | 8,16 | 8,39 | 8,14 | 7,4 |
| ML | dNm | 2,17 | 2,3 | 1,98 | 1,89 | 2,04 |
| MHF | dNm | 20,32 | 23,83 | 18,96 | 19,74 | 19,58 |
| MHF - ML | dNm | 18,15 | 21,5 | 16,98 | 17,85 | 17,54 |
| Shore-A-Härte RT | Shore A | 68,4 | 68,8 | 68,4 | 69,1 | 68,5 |
| Shore-A-Härte 70 °C | Shore A | 65,7 | 65,4 | 61,7 | 63,2 | 62,9 |
| Rückprallelast. RT | % | 23,8 | 24,9 | 22,9 | 22,6 | 22,2 |
| Rückprallelast. 70 °C | % | 46 | 44,6 | 42,5 | 42,2 | 40 |
| Zugfestigkeit bei RT | MPa | 14,7 | 14,6 | 14,2 | 15,3 | 13,3 |
| Reißdehnung bei RT | % | 423 | 370 | 444 | 456 | 429 |
| Spannungswert 100 % | MPa | 2,35 | 2,75 | 2,28 | 2,37 | 2,23 |
| Spannungswert 200 % | MPa | 5,65 | 6,45 | 5,38 | 5,6 | 5,21 |
| Spannungswert 300 % | MPa | 10,36 | 11,66 | 9,52 | 9,95 | 9,39 |
| Bruchenergiedichte | J/cm³ | 24,7 | 21,7 | 26,1 | 28,3 | 25 |
| tan δ 0 °C | - | 0,644 | 0,610 | 0,648 | 0,635 | 0,640 |
| tan δ 60 °C | - | 0,209 | 0,232 | 0,203 | 0,209 | 0,210 |
| E' 0 °C | MPa | 32,7 | 38,0 | 33,9 | 34,6 | 35,3 |
| E' 60 °C | MPa | 7,3 | 8,6 | 6,6 | 6,8 | 6,7 |

| | | | | | | |
|---|---|---|---|---|---|---|
| ^{b, c, d, e, f, g} wie zu Tabelle 1 | | | | | | |

Aus den Tabellen 1 und 2 wird ersichtlich, dass trotz reduziertem Zinkgehalt in der Mischung die Eigenschaften der Mischungen bzw. der Vulkanisate innerhalb einer Tabelle der zu vergleichenden Mischungen weitestgehend erhalten bleiben, wenn geringe Mengen an Zinkoxid in Kombination mit dem speziellen Prozesshilfsmittel eingesetzt werden. Eine alleinige Reduzierung des Zinkoxidanteils, ohne das spezielle Prozesshilfsmittel führt, wie aus den Mischungen 2(V) und 7 (V) ersichtlich zu deutlichen Einbußen in der strukturellen Haltbarkeit (Abnahme der Reißdehnung und der Bruchenergiedichte) und in den für Reifeneigenschaften relevanten Vulkanisateigenschaften, wie beispielsweise die für den Nassgriff als Indikatoren geltende Rückprallelastizität bei Raumtemperatur (je kleiner, desto besser der Nassgriff) und der Verlustfaktor tan δ 0 °C (je größer, desto besser der Nassgriff).

Die erfindungsgemäßen Mischungen zeigen hingegen im Vergleich zu Mischung 1(V) bzw. 6(V) die gleichen Mooney-Viskositäten auf. Der verfrühte Vulkanisationsbeginn ist bei allen Mischungen verhindert (niedrige t₁₀-Zeiten) und die Vulkanisation verläuft zumindest gleich schnell. In Tabelle 1 ist sogar eine leichte Erhöhung der Vernetzungsgeschwindigkeit bei den erfindungsgemäßen Mischungen zu verzeichnen. Die Netzwerkstärken sind ebenfalls bei Vergleichs- und erfindungsgemäßen Mischungen gleich.

Auch bei den Eigenschaften der Vulkanisate aus den Mischungen ergeben sich bei eingestellter Härte in Bezug auf Rückprallelastizität, Zugfestigkeit, Reißdehnung, Spannungswert (Maß für die Steifigkeit der Vulkanisate), tan δ bei 0 °C (korreliert mit dem Nassgriff bei Reifen), tan δ bei 60 °C (korreliert mit dem Rollwiderstand bei Reifen) und E' bei 0 °C und 60 °C (Maß für die dynamische Steifigkeit) Werte auf gleichem Niveau wie bei den Mischungen 1(V) bzw. 6(V).

Mit den erfindungsgemäßen Mischungen lassen sich demnach Reifen herstellen, die bei gleichbleibenden Reifeneigenschaften einen verringerten Zinkgehalt aufweisen. Die Reifen sind auf diese Weise verträglicher für die Umwelt und Probleme bei der Vulkanisation durch Ablagerung von Zinksulfid an den Entlüftungsventilen der Reifenform können vermindert oder verhindert werden.

## Patentansprüche

1. Schwefelvernetzbare Kautschukmischung, insbesondere für Laufstreifen von Reifen, enthaltend
- zumindest einen Dienkautschuk,
- Ruß und/oder Kieselsäure,
- 0,3 - 2 phr Zinkoxid und
- 0,5 - 6 phr zumindest eines Prozesshilfsmittels, welches aus Natrium- und/oder Kaliumseifen sowie Mono- und/oder Di-Glycerinestern von gesättigten und/oder ungesättigten C₁₀- bis C₂₈-Carbonsäuren zusammengesetzt ist, wobei das Gewichtsverhältnis von Natrium- und/oder Kaliumseifen zu Mono- und/oder Di-Glycerinestern im Prozesshilfsmittel 0,1 bis 10, vorzugsweise 2 bis 4, beträgt.

2. Kautschukmischung nach Anspruch 1, **dadurch gekennzeichnet, dass** sie 0,5 bis 1,5 phr Zinkoxid enthält.

3. Kautschukmischung nach Anspruch 1 oder 2, **dadurch gekennzeichnet, dass** das Zinkoxid ein hochaktives Zinkoxid mit einer BET-Oberfläche von 8 bis 50 m²/g, vorzugsweise 35 bis 45 m²/g, ist.

4. Kautschukmischung nach zumindest einem der vorhergehenden Ansprüche, **dadurch gekennzeichnet, dass** sie 1 bis 4 phr des Prozesshilfsmittels enthält.

5. Kautschukmischung nach zumindest einem der vorhergehenden Ansprüche, **dadurch gekennzeichnet, dass** das Prozesshilfsmittel aus Natrium- und/oder Kaliumseifen sowie Mono- und/oder Di-Glycerinestern von gesättigten und/oder ungesättigten C₁₄- bis C₁₈-Carbonsäuren; vorzugsweise von Palmitin- und Stearinsäure, zusammengesetzt ist.

6. Kautschukmischung nach zumindest einem der vorhergehenden Ansprüche, **dadurch gekennzeichnet, dass** der Gehalt an Natrium und/oder Kalium im Prozesshilfsmittel 0,2 bis 20 Gew.-%, vorzugsweise 2 bis 10 Gew.-%, beträgt.

7. Kautschukmischung nach zumindest einem der vorhergehenden Ansprüche, **dadurch gekennzeichnet, dass** der Anteil an Kalium bezogen auf den Gesamtalkalimetallgehalt im Prozesshilfsmittel 60 bis 90 mol-% beträgt.

8. Kautschukmischung nach zumindest einem der vorhergehenden Ansprüche, **dadurch gekennzeichnet, dass** der bzw. die Dienkautschuk(e) ausgewählt sind aus der Gruppe bestehend aus Naturkautschuk, synthetischem Polyisopren, Polybutadien und Styrol-Butadien-Copolymer.

9. Kautschukmischung nach zumindest einem der vorhergehenden Ansprüche, **dadurch gekennzeichnet, dass** sie
- 10 - 80 phr Naturkautschuk,
- 0 - 50 phr Polybutadien,
- 10 - 80 phr Styrol-Butadien-Copolymer,
- 10 - 100 phr Kieselsäure,
- 5 - 80 phr Ruß enthält.

10. Reifen, dessen Laufstreifen zumindest zum Teil aus einer mit Schwefel vulkanisierten Kautschukmischung nach zumindest einem der Ansprüche 1 bis 9 besteht.

## Claims

1. Sulphur-crosslinkable rubber mixture, in particular for treads of tyres, containing
- at least one diene rubber,
- carbon black and/or silica,
- 0.3 - 2 phr of zinc oxide and
- 0.5 - 6 phr of at least one process auxiliary which is composed of sodium and/or potassium soaps and mono- and/or diglyceryl esters of saturated and/or unsaturated C₁₀- to C₂₈-carboxylic acids, the weight ratio of sodium and/or potassium soaps to mono- and/or diglyceryl esters in the process auxiliary being from 0.1 to 10, preferably from 2 to 4.

2. Rubber mixture according to Claim 1, **characterized in that** it contains from 0.5 to 1.5 phr of zinc oxide.

3. Rubber mixture according to Claim 1 or 2, **characterized in that** the zinc oxide is a highly active zinc oxide having a BET surface area of from 8 to 50 m²/g, preferably from 35 to 45 m²/g.

4. Rubber mixture according to at least one of the preceding claims, **characterized in that** it contains from 1 to 4 phr of the process auxiliary.

5. Rubber mixture according to at least one of the preceding claims, **characterized in that** the process auxiliary is composed of sodium and/or potassium soaps and mono- and/or diglyceryl esters of saturated and/or unsaturated C₁₄- to C₁₈-carboxylic acids, preferably of palmitic and stearic acid.

6. Rubber mixture according to at least one of the preceding claims, **characterized in that** the content of sodium and/or potassium in the process auxiliary is from 0.2 to 20% by weight, preferably from 2 to 10% by weight.

7. Rubber mixture according to at least one of the preceding claims, **characterized in that** the proportion of potassium, based on the total alkali metal content in the process auxiliary, is from 60 to 90 mol%.

8. Rubber mixture according to at least one of the preceding claims, **characterized in that** the diene rubber(s) are selected from the group consisting of natural rubber, synthetic polyisoprene, polybutadiene and styrene-butadiene copolymer.

9. Rubber mixture according to at least one of the preceding claims, **characterized in that** it contains
- 10 - 80 phr of natural rubber,
- 0 - 50 phr of polybutadiene,
- 10 - 80 phr of styrene-butadiene copolymer,
- 10 - 100 phr of silica,
- 5 - 80 phr of carbon black.

10. Tyre whose tread consists at least partly of a sulphur-vulcanized rubber mixture according to at least one of Claims 1 to 9.

## Revendications

1. Mélange de caoutchouc réticulable avec du soufre, notamment pour bandes de roulement de pneus, contenant
- au moins un caoutchouc diène,
- du noir de carbone et/ou de la silice,
- 0,3 à 2 phr d'oxyde de zinc et
- 0,5 à 6 phr d'au moins un adjuvant de procédé, qui est composé de savons de sodium et/ou de potassium et d'esters mono- et/ou diglycériques d'acides carboxyliques en C₁₀ à C₂₈ saturés et/ou insaturés, le rapport de poids entre les savons de sodium et/ou de potassium et les esters mono- et/ou diglycériques dans l'adjuvant de procédé étant de 0,1 à 10, de préférence de 2 à 4.

2. Mélange de caoutchouc selon la revendication 1, **caractérisé en ce qu'**il contient 0,5 à 1,5 phr d'oxyde de zinc.

3. Mélange de caoutchouc selon la revendication 1 ou 2, **caractérisé en ce que** l'oxyde de zinc est un oxyde de zinc hautement actif qui présente une surface BET de 8 à 50 m²/g, de préférence de 35 à 45 m²/g.

4. Mélange de caoutchouc selon au moins une des revendications précédentes, **caractérisé en ce qu'**il contient 1 à 4 phr de l'adjuvant de procédé.

5. Mélange de caoutchouc selon au moins une des revendications précédentes, **caractérisé en ce que** l'adjuvant de procédé est composé de savons de sodium et/ou de potassium et d'esters mono- et/ou diglycériques d'acides carboxyliques en C₁₄ à C₁₈ saturés et/ou insaturés, de préférence d'acide palmitique et stéarique.

6. Mélange de caoutchouc selon au moins une des revendications précédentes, **caractérisé en ce que** la teneur en sodium et/ou en potassium de l'adjuvant de procédé est de 0,2 à 20 % en poids, de préférence de 2 à 10 % en poids.

7. Mélange de caoutchouc selon au moins une des revendications précédentes, **caractérisé en ce que** la proportion de potassium par rapport à la teneur totale en métaux alcalins de l'adjuvant de procédé est de 60 à 90 % en moles.

8. Mélange de caoutchouc selon au moins une des revendications précédentes, **caractérisé en ce que** le ou les caoutchoucs diènes sont choisis dans le groupe constitué du caoutchouc naturel, du polyisoprène synthétique, du polybutadiène et du copolymère styrène-butadiène.

9. Mélange de caoutchouc selon au moins une des revendications précédentes, **caractérisé en ce qu'**il contient
- 10 à 80 phr de caoutchouc naturel,
- 0 à 50 phr de polybutadiène,
- 10 à 80 phr de copolymère styrène-butadiène,
- 10 à 100 phr de silice,
- 5 à 80 phr de noir de carbone.

10. Pneus, dont les bandes de roulement sont constituées au moins en partie d'un mélange de caoutchouc vulcanisé avec du soufre selon au moins une des revendications 1 à 9.
